# EUROPÄISCHE PATENTANMELDUNG

(11) **EP 1 563 909 A2**
(43) Veröffentlichungstag der Anmeldung: **17.08.2005**
(21) Anmeldenummer: 05100675.7
(22) Anmeldetag: 01.02.2005
(51) Int. Cl.: B04C 5/26, B04C 5/28, B04C 5/12, B04C 5/14

(54) **Zyklonabscheidevorrichtung**

(30) Priorität: 12.02.2004 DE 102004006834
(71) Anmelder: MANN+HUMMEL GmbH, 71638 Ludwigsburg (DE)
(72) Erfinder: Weber, Andreas, 71642, Ludwigsburg (DE)

(57) **Zusammenfassung**

Die Erfindung betrifft eine Abscheidevorrichtung zur Reinigung eines Gasstromes, insbesondere zur Reinigung von Kurbelgehäusegasen. Die Abscheidevorrichtung weist einen Mutterzyklon (10) und mindestens drei Tochterzyklone (13) auf, wobei die Tochterzyklone (13) innerhalb des Mutterzyklons (10) angeordnet sind. Die Tochterzyklone (13), welche parallel zu einander geschaltet sind, sind in Reihe zu dem Mutterzyklon (10) geschaltet. Das zu reinigende Gas durchströmt zuerst den Mutterzyklon (10), wo gröbere Verunreinigungen abgeschieden werden. Anschließend durchströmt der vorgereinigte Gasstrom die Tochterzyklone (13), wobei alle Tochterzyklone (13) zeitgleich durchströmt werden. Der gereinigte Gasstrom strömt durch einen Auslass (26) aus der Abscheidevorrichtung aus.

## Beschreibung

### Stand der Technik

Die Erfindung betrifft eine Abscheidevorrichtung zur Reinigung eines Gasstromes, insbesondere zur Reinigung von Kurbelgehäusegasen nach dem Oberbegriff des Patentanspruches 1. Außerdem betrifft die Erfindung ein Verfahren zur Reinigung eines Gasstromes nach Anspruch 7.

Aus der DE 870 531 ist eine Vorrichtung und ein Verfahren zur Trennung von in einer Flüssigkeit suspendierten Feststoffen bekannt. Hierzu verfügt die Vorrichtung über einen Mutterzyklon und einen Tochterzyklon, wobei der Tochterzyklon von dem Mutterzyklon umgeben ist. Die durch den Mutterzyklon vorgereinigte Flüssigkeit wird anschließend in den Tochterzyklon eingeleitet, wo die Flüssigkeit erneut gereinigt wird. Die gereinigte Flüssigkeit durchläuft somit zwei in Reihe geschaltete Reinigungsstufen. Nachteilig bei dieser Ausführung ist, dass der Strömungswiderstand durch den, in seinen Abmessungen kleiner ausgeführten Tochterzyklon ansteigt.

Aufgabe der Erfindung ist es, eine Abscheidevorrichtung zu schaffen, welche über geringe Druckverluste verfügt und hohe Abscheidegrade erzielt. Weiterhin soll die Abscheidevorrichtung kostengünstig und einfach herstellbar sein. Diese Aufgabe wird durch die Merkmale des Patentanspruches 1 und 7 gelöst.

### Vorteile der Erfindung

Die erfindungsgemäße Abscheidevorrichtung zur Reinigung eines Gasstromes, insbesondere zur Reinigung von Kurbelgehäusegasen weist einen Mutterzyklon mit einem Einlass, einer Abscheidekammer und einem Austrag auf. In der Abscheidekammer des Mutterzyklons sind mindestens drei Tochterzyklone angeordnet. Die Tochterzyklone verfügen jeweils über eine Eintrittsöffnung, eine Trennkammer, eine Austrittsöffnung und eine Austragsöffnung, wobei alle Tochterzyklone die gleiche Geometrie aufweisen. Die Eintrittsöffnungen der Tochterzyklone sind korrespondierend mit der Abscheidekammer des Mutterzyklons verbunden, wobei alle Tochterzyklone parallel geschaltet sind und zeitgleich durchströmt werden. Der zu reinigende Gasstrom teilt sich in dem Mutterzyklon gleichmäßig auf alle Tochterzyklone auf, wodurch jeder Tochterzyklon mit dem gleichem Volumenstrom durchströmt wird. Dadurch herrschen in jedem Tochterzyklon die gleichen Abscheidebedingungen. Jeder Volumenstrom verfügt nach dem Verlassen des einzelnen Tochterzyklons über die gleiche Reinigung. Der in den Tochterzyklonen gereinigte Gasstrom tritt durch die Austrittsöffnungen in eine gemeinsame Reingasleitung, von wo aus das gereinigte Gas einem Verbraucher zugeführt oder an die Umgebung abgegeben werden kann. Der Vorteil der Erfindung ist, dass ein relativ großer Volumenstrom in dem Mutterzyklon vorgereinigt werden kann und ohne große Druckverluste einer feineren Reinigungsstufe unterzogen werden kann.

Die erfindungsgemäße Vorrichtung kann zur Reinigung eines beliebigen Fluids verwendet werden, welches über Bestandteile mit unterschiedlichen spezifischen Gewichten verfügt. Hierbei können z.B. Flüssigkeiten oder Partikel aus Gasen abgeschieden werden. Derartige Gas-Flüssigkeitsgemische können z.B. Luft-Wassergemische oder Luft-Staubgemische einer Ansaufluft für Brennkraftmaschinen oder Luft-Ölgemische aus Kurbelgehäusen einer Brennkraftmaschine sein.

Durch den Einlass des Mutterzyklons tritt das zu reinigende Gas, insbesondere Kurbelgehäusegas, in den Mutterzyklon ein. In der Abscheidekammer des Mutterzyklons werden durch die Zentrifugalkraft größere Verunreinigungsbestandteile abgeschieden und durch den Austrag aus dem Mutterzyklon entfernt. Der vorgereinigte Volumenstrom teilt sich gleichmäßig auf die in dem Mutterzyklon angeordneten Tochterzyklone auf, dadurch wird verhindert, dass der Differenzdruck durch die Tochterzyklone zu stark ansteigt. In den Tochterzyklonen wird der zu reinigende Gasstrom erneut in Rotation versetzt, wodurch auch die feineren Verunreinigungen durch die Zentrifugalkraft nach außen getragen und an der Trennkammerwand abgeschieden werden. Die Verunreinigungen werden durch die Austragsöffnung aus dem Tochterzyklon ausgetragen. Der gereinigte Volumenstrom verlässt den Tochterzyklon durch die Austrittsöffnung. Hierbei können die Volumenströme aller Tochterzyklone in eine zentrale Reingasleitung geleitet werden.

Um die Abscheidevorrichtung kostengünstig herstellen zu können, ist es zweckmäßig, den Mutterzyklon und die Tochterzyklone aus Kunststoff zu fertigen. Der Mutterzyklon ist als einfach zu entformendes Kunststoffspritzgußteil aus z.B. Polyethylen, Polypropylen, Polyamid oder anderen Thermoplastischen Kunststoffen, ausgebildet. Die Tochterzyklone können ebenfalls als Kunststoffspritzgußteil ausgebildet sein. Sie werden in den Mutterzyklon eingesetzt und durch z.B. kleben, schweißen, schrauben oder schnappen in dem Mutterzyklon fixiert.

Gemäß einer weiteren Ausgestaltung der Erfindung sind die Tochterzyklone um eine Mittelachse in der Abscheidekammer des Mutterzyklons angeordnet, wodurch der in dem Mutterzyklon zur Verfügung stehende Raum optimal ausgenutzt ist. Bei dieser Ausgestaltung ist der, um die Tochterzyklone herum zur Verfügung stehende Abscheidebereich gleich, wodurch eine vorteilhafte Durchströmung der Abscheidekammer erzielt wird. Weiterhin sind alle Tochterzyklone gleich anströmbar.

Gemäß einer vorteilhaften Ausgestaltung der Erfindung verfügen die Tochterzyklone über Stutzen an den Eintrittsöffnungen. Diese sind vorteilhafter Weise entgegen der in dem Mutterzyklon herrschenden Strömungsrichtung gerichtet sind, wodurch der zu reinigende Gasstrom beim Einströmen in die Tochterzyklone eine Strömungsrichtungsänderung erfährt, was eine bessere Abscheidung der Verunreinigungen bewirkt. Weiterhin dient der Stutzen dazu, die Strömung beim Eintritt in die Tochterzyklone auszurichten, wodurch der Gasstrom in den Tochterzyklonen mit höheren Geschwindigkeiten rotiert und somit bessere Abscheideergebnisse erzielt.

Bei einer weiteren Ausgestaltung der Erfindung sind die Austragsöffnungen der Tochterzyklone mit einer gemeinsamen Austragsleitung korrespondierend verbunden. Der Austrag des Mutterzyklons verfügt über eine eigene Ableitung, welcher von der Austragsleitung der Tochterzyklone getrennt ist. Die gröberen Verunreinigungen, welche durch den Mutterzyklon abgeschieden wurden, werden nicht mit den feineren, durch die Tochterzyklone abgetrennten Verunreinigungen vermischt. Dadurch können die abgetrennten Verunreinigungen getrennt abgeführt und entsorgt werden.

Gemäß einer Weiterbildung der Erfindung verfügt die Austragsleitung der Tochterzyklone über ein Austragsventil verfügt, durch welches die Austragsleitung öffen- und verschließbar ist. Somit können die Verunreinigungen der Tochterzyklone diskontinuierlich entfernt werden, wobei es möglich ist, spezielle Behältnisse unter der Austragsleitung zu positionieren. Die Entleerung der Austragsleitung kann somit an die entsprechenden Umgebungsbedingungen, insbesondere die Betriebsbedingungen einer Brennkraftmaschine angepasst werden. Weiterhin ist es denkbar, dass Sensoren vorgesehen sind, welche erfassen, ob in der Austragsleitung Verunreinigungen enthalten sind, welche ausgetragen werden müssen. Durch das Austragsventil verfügt die Austragsleitung über einen Verschluss, welcher verhindert, dass über diese Austragsleitung ein Falschgasstrom in die Tochterzyklone gelangt und sich mit dem zu reinigenden Gas vermischt bzw. ein Gasstrom aus den Tochterzyklonen austritt.

Bei einer weiteren Ausgestaltung der Erfindung verfügt die Ableitung des Mutterzyklons über ein Ableitungsventil, mit welchem die Ableitung öffen- und verschließbar ist. Somit können durch die Ableitung keine Gase in den Mutterzyklon eintreten. Dieses Ableitungsventil verfügt über die gleichen Vorteile, wie das Austragsventil in der Austragsleitung der Tochterzyklone. Alternativ zu dem Ableitungsventil kann auch ein Siphon in der Ableitung angeordnet sein oder die Ableitung erst unterhalb eines Flüssigkeitspegels enden. Somit wird verhindert, dass Gase, insbesondere Kurbelgehäusegase durch die Ableitung in den Mutterzyklon eintreten. Das abgeschiedene Öl aus Kurbelgehäusegasen wird dann dem Kurbelgehäuse wieder zugeführt.

Bei dem erfindungsgemäßen Verfahren zur Reinigung eines Gasstromes mit einer oben beschriebenen Abscheidevorrichtung tritt der zu reinigende Gasstrom durch den Einlass in den Mutterzyklon ein, wobei grobe Verunreinigungen des Gasstromes abgeschieden werden. Diese groben Verunreinigungen sind über die Ableitung aus dem Mutterzyklon entfernbar. Der durch den Mutterzyklon vorgereinigte Gasstrom tritt durch die Eintrittsöffnung in die Tochterzyklone ein, wobei in den Tochterzyklonen feinere Verunreinigungen aus dem Gasstrom entfernt werden. Diese feineren Verunreinigungen werden durch die Austragsleitungen aus den Tochterzyklonen entfernt.

Gemäß einer vorteilhaften Weiterbildung der Erfindung wird der durch den Mutterzyklon vorgereinigte Gasstrom in mehrere Teilströme aufgeteilt, wobei die Anzahl der Teilströme der Anzahl der Tochterzyklone entspricht. Dadurch werden alle Tochterzykloneparallel durchströmt.

Eine Weiterbildung des erfindungsgemäßen Verfahrens sieht vor, dass alle Teilströme gleich groß sind, wodurch in allen Tochterzyklonen die gleichen Strömungsbedingungen herrschen und somit auch gleiche Abscheidegrade erzielt werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: eine Abscheidevorrichtung im Schnitt
- Figur 2: eine Abscheidevorrichtung gemäß Figur 1 in der Draufsicht
- Figur 3: eine Variante der Abscheidevorrichtung im Schnitt
- Figur 4: eine weitere Variante der Abscheidevorrichtung im Schnitt
- Figur 5: eine Abscheidevorrichtung gemäß Figur 4 in der Draufsicht und
- Figur 6: eine Abscheidevorrichtung in der Draufsicht.

### Beschreibung der Ausführungsbeispiele

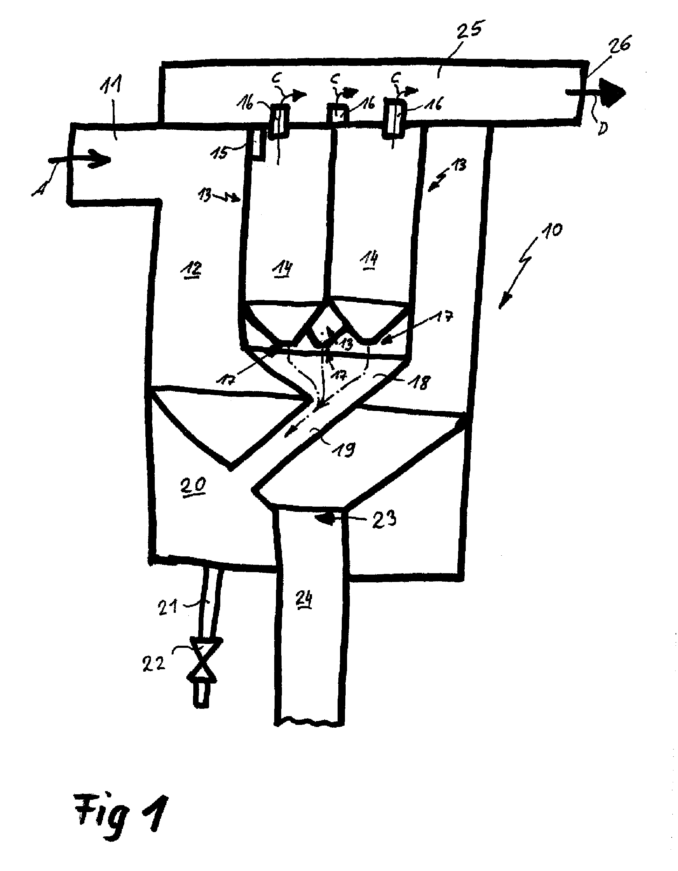

In Figur 1 ist eine Abscheidevorrichtung im Schnitt schematisch dargestellt. Figur 2 zeigt schematisch die Abscheidevorrichtung gemäß Figur 1 in der Draufsicht. Die Abscheidevorrichtung verfügt über einen Mutterzyklon 10, welcher einen tangentialen Einlass 11 und eine Abscheidekammer 12 aufweist. In der Abscheidekammer 12 des Mutterzyklons 10 sind drei Tochterzyklone 13 um die Mittelachse des Mutterzyklons 10 angeordnet. Jeder Tochterzyklon 13 verfügt über eine Trennkammer 14, eine Eintrittsöffnung 15 für das zu reinigende Gas, eine Austrittsöffnung 16 für das gereinigte Gas und eine Austragsöffnung 17 für die abgeschiedenen Verunreinigungen. Die Trennkammern 14 sind zylindrisch ausgebildet, wobei sich die Tochterzyklone 13 bei dieser Ausgestaltung berühren. Die zylindrische Form der Trennkammer 14 geht im unteren Bereich der Tochterzyklone 13 in eine kegelstumpf Form über, wodurch die Austragsöffnung 17 gebildet wird. Die Austragsöffnungen 17 münden in eine gemeinsame Sammelkammer 18, welche in eine Austragsleitung 19 mündet. Die Austragsleitung verbindet die Sammelkammer 18 mit einem Speicher 20, in welchem die abgeschiedenen Verunreinigungen gespeichert werden, bis eine Entleerung des Speichers 20 über eine Leitung 21 erfolgt. In der Leitung 21 ist ein Austragsventil 22 angeordnet, welches im geschlossenen Zustand ein Austreten der Verunreinigungen aus dem Speicher 20 verhindert. Im geöffneten Zustand des Austragsventils 22 können die flüssigen Verunreinigungen abgelassen bzw. die nicht flüssigen Verunreinigungen abgesaugt werden. Damit die in den Tochterzyklonen 13 abgeschiedenen Verunreinigungen sich nicht mit den im Mutterzyklon 10 abgeschiedenen Verunreinigungen mischen, verfügt der Mutterzyklon über einen Austrag 23, welcher in eine stutzenförmig ausgebildete Ableitung 24 mündet. Die Ableitung 24 ist dichtend getrennt von der Austragsleitung 19 der Tochterzyklone 13 ausgeführt.

Die Austrittsöffnungen 16 der Tochterzyklone 13 münden in eine zentrale Reingasleitung 25, von wo aus das gereinigte Gas durch einen Auslass 26 zu seinem Verbraucher geleitet oder an die Umgebung abgegeben werden kann.

Das zu reinigende Gas, insbesondere ein Luft-Öl-Gemisch einer Kurbelgehäuseentlüftung, strömt in Pfeilrichtung A durch den Einlass 11 in den Mutterzyklon 10 der Abscheidevorrichtung ein. Durch die tangentiale Anordnung des Einlasses 11 wird das Gas in Rotation versetzt. Durch die Zentrifugalkraft werden die schwereren flüssigen oder festen Bestandteile des Gases gegen die Wand der Abscheidekammer 12 geschleudert, wo sie sich niederschlagen und nach unten weg fließen. Die abgeschiedenen Verunreinigungen gelangen durch den Austrag 23 in die Ableitung 24 und werden somit aus der Abscheidevorrichtung ausgetragen. Das in der Abscheidekammer 12 vorgereinigte Gas teilt sich in drei Teilströme für die drei Tochterzyklone 13 auf. Durch die Eintrittsöffnung 15 eines jeden Tochterzyklons 13 tritt das vorgereinigte Gas in Pfeilrichtung B in die Trennkammer 14 der Tochterzyklone 13 ein. Durch die tangentiale Anordnung der Eintrittsöffnung 15, welche als Stutzen ausgebildet ist, wird das zu reinigende Gas erneut in Rotation versetzt. In der Trennkammer 14 des Tochterzyklons 13 scheiden sich kleinere Bestandteile aus dem Gasstrom ab und lagern sich an der Wand der Trennkammer 14 an. Der auf diese Weise gereinigte Gasstrom verlässt die Trennkammer 14 in Pfeilrichtung C durch die Austrittsöffnung 16, welche zentral in dem Tochterzyklon 13 angeordnet ist. Alle Austrittsöffnungen 16 der Tochterzyklone 13 münden in die Reingasleitung 25, wo sich die Teilströme des gereinigten Gases wieder vereinen und durch den Auslass 26 in Pfeilrichtung D die Abscheidevorrichtung verlassen. Die in der Trennkammer14 des Tochterzyklons 13 abgeschiedenen Verunreinigungen verlassen den Tochterzyklon 13 durch die Austragsöffnung 17. In der unterhalb der Austragsöffnung 17 angeordneten Sammelkammer 18 werden die abgeschiedenen Verunreinigungen der einzelnen Tochterzyklone 13 zusammengeführt und durch die gemeinsame Austragsleitung 19 zu dem Speicher 20 geleitet. In dem Speicher 20 ist ausreichend Platz vorhanden, die Verunreinigungen so lange zu speichern, bis das Austragsventil 22 geöffnet wird und die Verunreinigungen durch die Leitung 21 aus dem Speicher 20 entfernt werden.

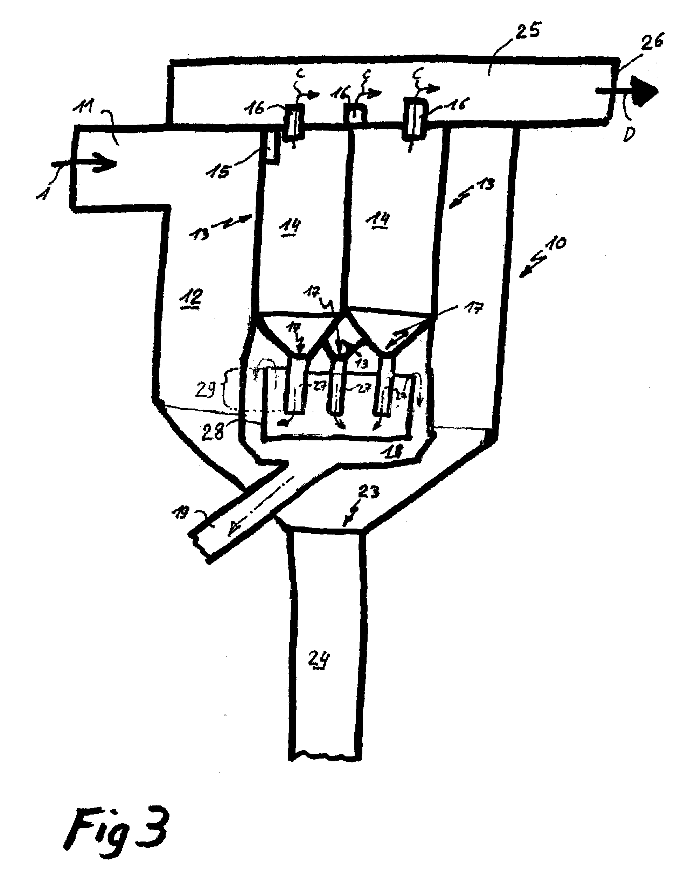

In Figur 3 ist eine Variante der Abscheidevorrichtung schematisch dargestellt. Diese Ausführung ist vorzugsweise zur Abscheidung von flüssigen Verunreinigungen aus einem Gasstrom vorgesehen. Der Figur 1 entsprechende Bauteile sind mit gleichen Bezugszeichen versehen. Sofern nachfolgend nicht anders beschrieben, entsprechen die Durchströmungen der Vorrichtung der in Figur 1 beschriebenen Durchströmungen. Der Unterschied zu der in Figur 1 dargestellten Abscheidevorrichtung besteht darin, dass die Austragsöffnungen 17 der Tochterzyklone in jeweils ein Stutzenstück 27 übergehen. Die Stutzenstücke 27 ragen in eine gemeinsame Wanne 28, wobei zwischen der Wanne 28 und den Stutzenstücken 27 ein Spalt vorgesehen ist, durch welchen die abgeschiedenen Verunreinigungen in die Wanne 28 gelangen. Die Höhe der Wanne 28 bildet mit den Stutzenstücken 27 einen Überdeckungsbereich 29. Die abgeschiedenen Flüssigkeiten sammeln sich in der Wanne 28 und überdecken den unteren Bereich der Stutzenstücke 27, wodurch ein Siphon gebildet wird. Dadurch kann kein Volumenstrom durch die Stutzenstücke 27 von dem Mutterzyklon 10 oder der Austragsleitung 19 in den Tochterzyklon 13 gelangen. Sobald die Wanne 28 voll ist und weitere Verunreinigungen abgeschieden werden, treten die in der Wanne 28 enthaltenen Verunreinigungen über den Rand der Wanne 28 und gelangen in die Sammelkammer 18, von wo aus sie in die Austragsleitung 19 fließen. Bei diesem Ausführungsbeispiel ist die Sammelkammer 18 dichtend mit den Tochterzyklonen 13 verbunden, wodurch die Abscheidekammer 12 des Mutterzyklons 10 dichtend von der Sammelkammer 18 getrennt ist.

Bei anderen Ausführungen ist auch denkbar, dass keine Sammelkammer 18 erforderlich ist. Dann treten die Verunreinigungen über den Rand der Wanne 28 und vermischen sich mit den im Mutterzyklon 10 abgeschiedenen Verunreinigungen. Die Verunreinigungen beider Zyklone werden dann durch die Ableitung 24 aus der Abscheidevorrichtung ausgetragen. Bei einer derartigen Ausführung ist dann die Wanne 28 z.B. mit Streben (nicht dargestellt) unterhalb der Tochterzyklone 13 fixiert. Durch den Überdeckungsbereich 29 gelangt kein Volumenstrom durch die Stutzenstücke 27 vom Mutterzyklon 10 in den Tochterzyklon 13.

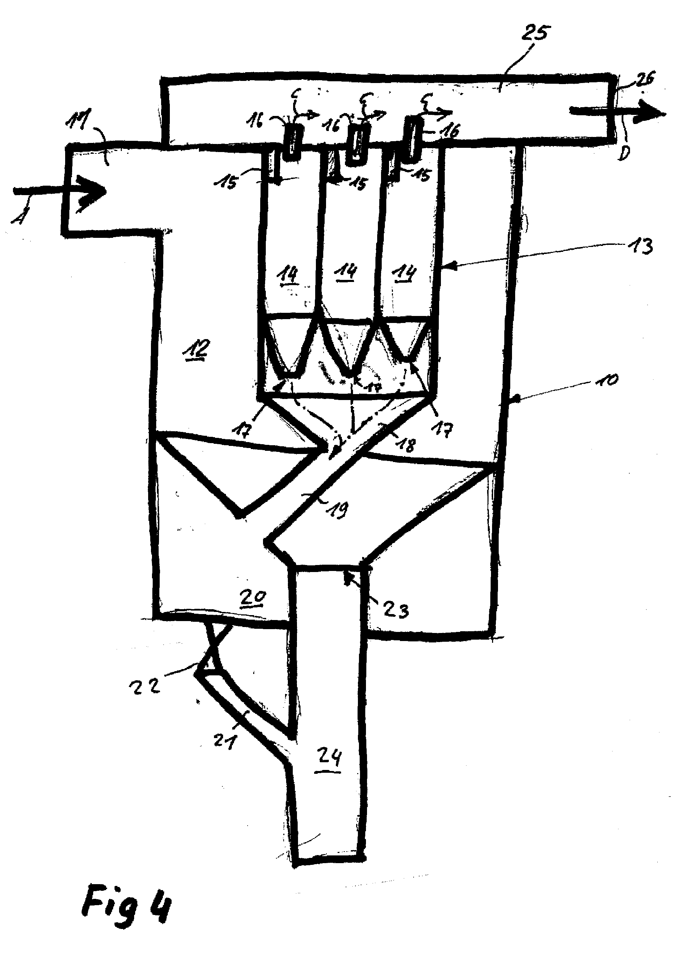

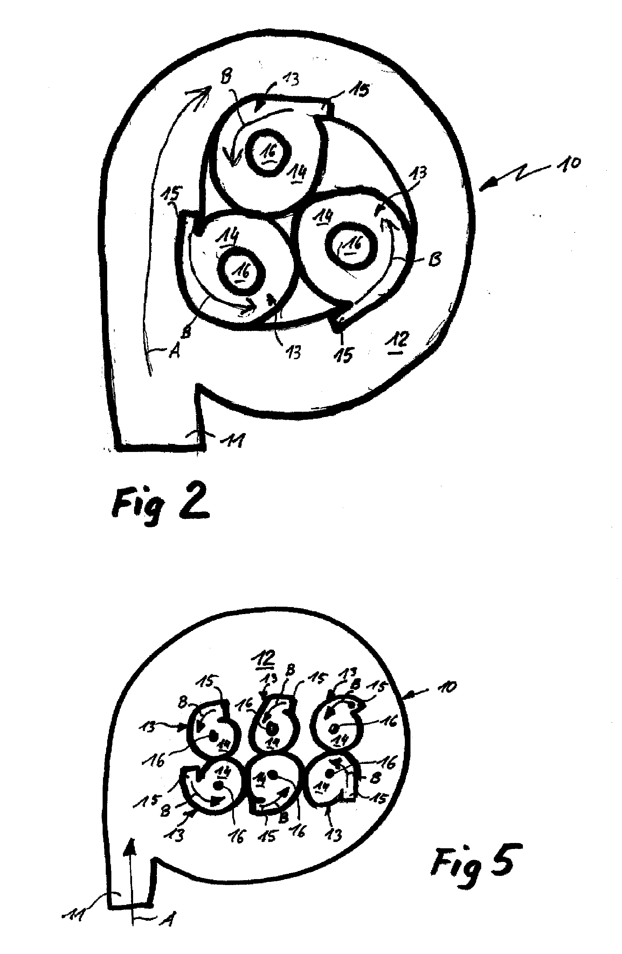

In Figur 4 ist eine weitere Variante der Abscheidevorrichtung im Schnitt dargestellt. Der Figur 1 entsprechende Bauteile sind mit gleichen Bezugszeichen versehen. Sofern nachfolgend nicht anders beschrieben, entsprechen die Durchströmungen der Vorrichtung der in Figur 1 beschriebenen Durchströmungen. Der Unterschied zu der in Figur 1 beschriebenen Vorrichtung besteht in der Anzahl und Anordnung der Tochterzyklone 13, sowie der Weiterführung der Leitung 21. Bei dieser Variante sind sechs Tochterzyklone 13 in der Abscheidekammer 12 des Mutterzyklons 10 angeordnet. Die Anordnung der Tochterzyklone13 in dem Mutterzyklon 10 ist in Figur 5 dargestellt. Der Figur 2 entsprechende Bauteile sind mit gleichen Bezugszeichen versehen. Diese sechs Tochterzyklone 13 sind in zwei Reihen angeordnet, wobei deren Eintrittsöffnung 15 entgegen der im Mutterzyklon 10 herrschenden Strömungsrichtung angeordnet ist. Durch die große Anzahl der Tochterzyklone 13 sind diese kleiner ausgeführt, wodurch noch feinere Verunreinigungen aus dem Volumenstrom abgeschieden werden.

Die Leitung 21 ist nach dem Austragsventil 22 mit der Ableitung 24 verbunden, wodurch die Verunreinigungen beider Zyklone 10, 13 gemeinsam aus der Abscheidevorrichtung entfernt werden.

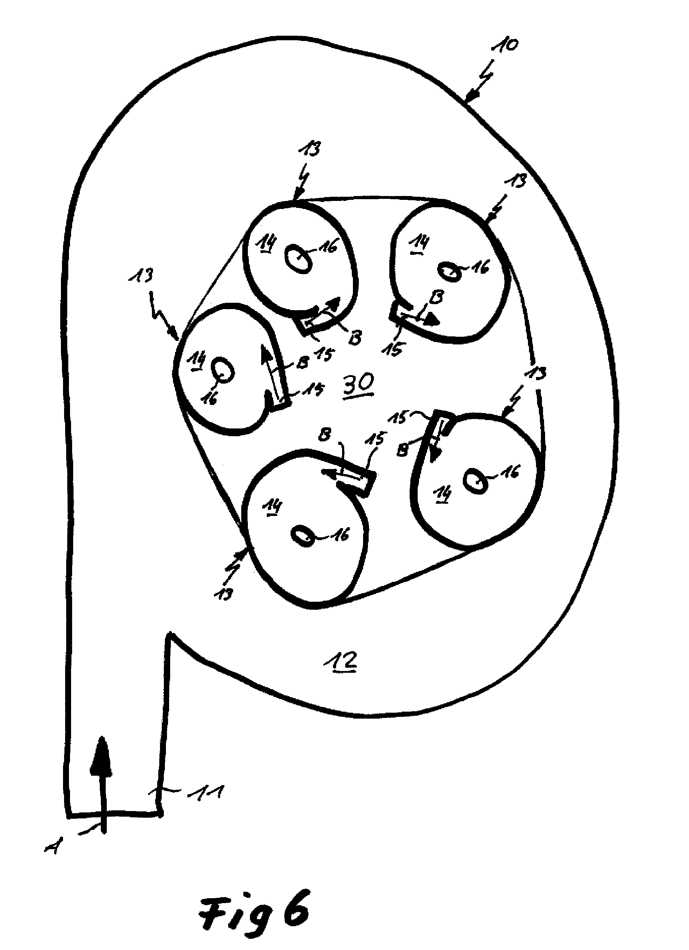

In Figur 6 ist eine Abscheidevorrichtung in der Draufsicht dargestellt. Der Figur 2 entsprechende Bauteile sind mit gleichen Bezugszeichen versehen. Bei dieser Ausgestaltung sind fünf Tochterzyklone 13 kreisförmig in dem Mutterzyklon 10 angeordnet. Zwischen den Tochterzyklonen 13 sind Abstände vorhanden, somit berühren die Tochterzyklone 13 einander nicht. Weiterhin umgeben die Tochterzyklone 13 einen Mittenbereich 30. Das zu reinigende Fluid kann durch die Abstände zwischen den Tochterzyklonen 13 in den Mittenbereich 30 strömen. Die Eintrittsöffnungen 15 der Tochterzyklone 13 münden in den Mittenbereich 30. Somit muss das Fluid durch die Abstände zwischen den Tochterzyklonen 13 hindurchtreten, um zu den Eintrittsöffnungen 15 der Tochterzyklone 13 zu gelangen. Dadurch scheiden sich Verunreinigungen auch an der Außenseite der Tochterzyklone 13 ab und der Volumenstrom verfügt über eine bessere Vorreinigung.

## Patentansprüche

1. Abscheidevorrichtung zur Reinigung eines Gasstromes, insbesondere zur Reinigung von Kurbelgehäusegasen, aufweisend einen Mutterzyklon (10) und einen Tochterzyklon (13),
- wobei der Mutterzyklon (10) über einen Einlass (11) für das zu reinigende Gas, eine Abscheidekammer (12) und einen Austrag (23) verfügt,
- wobei der Tochterzyklon (13) in der Abscheidekammer (12) des Mutterzyklons (10) angeordnet ist,
- wobei, der Tochterzyklon (13) über eine Eintrittsöffnung (15) verfügt, welche korrespondierend mit der Abscheidekammer (12) des Mutterzyklons (10) verbunden ist, und
- wobei der Tochterzyklon (13) über eine Trennkammer (14), eine Austrittsöffnung (16) für das gereinigte Gas und eine Austragsöffnung (17) verfügt,
**dadurch gekennzeichnet, dass**
- mindestens drei Tochterzyklone (13) in der Abscheidekammer (12) des Mutterzyklons (10) angeordnet sind, wobei die Tochterzyklone (13) parallel geschaltet sind und alle Tochterzyklone (13) zeitgleich durchströmbar sind und wobei die Austrittsöffnungen (16) in einen gemeinsamen Auslass (26) münden.

2. Abscheidevorrichtung nach Anspruch 1, **dadurch gekennzeichnet, dass** die mindestens drei Tochterzyklone (13) um eine Mittelachse in der Abscheidekammer (12) des Mutterzyklons (10) angeordnet sind.

3. Abscheidevorrichtung nach einem der Ansprüche 1 oder 2, **dadurch gekennzeichnet, dass** die Tochterzyklone (13) über Stutzen an den Eintrittsöffnungen (15) verfügen, welche entgegen der in dem Mutterzyklon (10) herrschenden Strömungsrichtung gerichtet sind.

4. Abscheidevorrichtung nach einem der vorangehenden Ansprüche, **dadurch gekennzeichnet, dass** die Austragsöffnungen (17) der Tochterzyklone (13) mit einer gemeinsamen Austragsleitung (19) korrespondierend verbunden sind, und der Austrag (23) des Mutterzyklons (10) über eine eigene Ableitung (24) verfügt, welche von der Austragsleitung (19) getrennt ist.

5. Abscheidevorrichtung nach Anspruch 4, **dadurch gekennzeichnet, dass** die Austragsleitung (19) über ein Austragsventil (22) verfügt, durch welches die Austragsleitung (19) öffen- und verschließbar ist.

6. Abscheidevorrichtung nach Anspruch 4, **dadurch gekennzeichnet, dass** die Ableitung (24) über ein Ableitungsventil verfügt, mit welchem die Ableitung (24) öffen- und verschließbar ist.

7. Verfahren zur Reinigung eines Gasstromes mit einer Abscheidevorrichtung gemäß einem der vorangehenden Ansprüche, **dadurch gekennzeichnet, dass** der zu reinigende Gasstrom durch den Einlass (11) in dem Mutterzyklon (10) eintritt und grobe Verunreinigungen des Gasstromes abgeschieden werden, wobei diese groben Verunreinigungen über die Ableitung (24) aus dem Mutterzyklon (10) entfernbar sind, und
- der durch den Mutterzyklon (10) vorgereinigte Gasstrom durch die Eintrittsöffnung (15) in die Tochterzyklone (13) eintritt, wobei in den Tochterzyklonen (13) feinere Verunreinigungen aus dem Gasstrom entfernt werden, wobei diese feineren Verunreinigungen durch die Austragsleitungen (19) aus den Tochterzyklonen (13) entfernt werden.

8. Verfahren nach Anspruch 7, **dadurch gekennzeichnet, dass** der durch den Mutterzyklon vorgereinigte Gasstrom in mehrere Teilströme aufgeteilt wird, wobei die Anzahl der Teilströme der Anzahl der Tochterzyklone (13) entspricht.

9. Verfahren nach Anspruch 8, **dadurch gekennzeichnet, dass** alle Teilströme gleich groß sind.
